# EUROPEAN PATENT APPLICATION

(11) **EP 1 724 773 A1**
(43) Date of publication of application: **22.11.2006**
(21) Application number: 05720280.6
(22) Date of filing: 08.03.2005
(51) Int. Cl.: G11B 7/26, B05D 3/06, B05C 9/12

(54) **OPTICAL DISK ULTRAVIOLET IRRADIATING DEVICE AND OPTICAL DISK ULTRAVIOLET IRRADIATING METHOD**

(30) Priority: 08.03.2004 JP 2004064567
(71) Applicant: Kitano Co., Ltd., Komatsushima-shi Tokushima 773-0008 (JP)
(72) Inventor: INOUE, Takao, Komatsushima-shi, Tokushima 7730008 (JP); MASUDA, Hiroyuki, Komatsushima-shi, Tokushima 7730008 (JP); AKI, Masashi, Komatsushima-shi, Tokushima 7730008 (JP); AMO, Mikuni, Komatsushima-shi, Tokushima 7730008 (JP); TSURUHA, Masayuki, KITANO ENGINEERING CO., LTD, Komatsushima-shi, Tokushima 773-0008 (JP)
(74) Representative: Goddar, Heinz J.
(86) International application number: PCT/JP2005/004008
(87) International publication number: WO 2005/086150

(57) **Abstract**

An ultraviolet-irradiating device of an optical disk which makes effective use of electric power and has a long life, and an ultraviolet-irradiating method to an optical disk are provided. An ultraviolet-irradiating device 14 of an optical disk for irradiating ultraviolet curable resin A applied to a disk substrate D with ultraviolet rays from an ultraviolet-irradiating unit 143 to cure the ultraviolet curable resin A, wherein an ultraviolet light-emitting diode R is used as an ultraviolet light source of the ultraviolet-irradiating unit 143. According to the present invention, since the ultraviolet light-emitting diode R is used as an ultraviolet light source, lights in a visible region and an infrared region are not emitted like a conventional xenon lamp, that is, only ultraviolet rays required for curing the ultraviolet curable resin can be irradiated, so that power consumption required for light emission of the light source can be reduced. Further, since a life of the ultraviolet light-emitting diode R is long, the number of replacement times is reduced, which improves operation rate.

## Description

### Technical Field

The present invention relates to a device and a method for irradiating ultraviolet curable resin applied on a disk substrate with ultraviolet rays to cure the same.
More specifically, the present invention relates to an ultraviolet-irradiating device of an optical disk for irradiating ultraviolet curable resin applied on a disk substrate with ultraviolet rays to cure the same, and an ultraviolet-irradiating method to an optical disk.

### Background art

Conventionally, a method for causing a xenon lamp to emit light has been known as a method for joining disk substrates with each other by irradiating ultraviolet curable resin (namely, adhesive agent) applied on the disk substrates with ultraviolet rays.

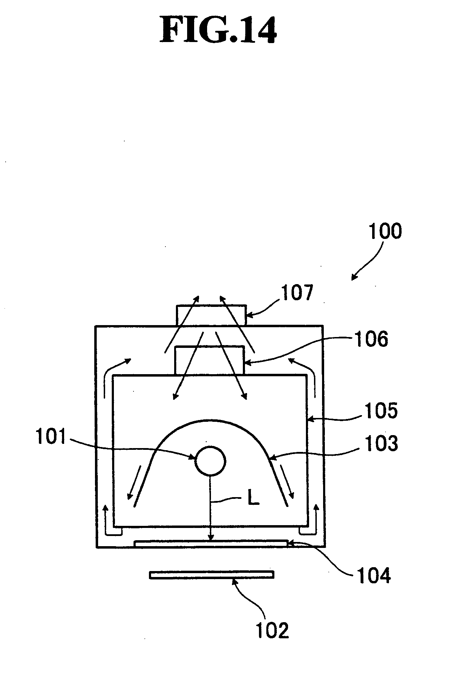

Fig. 14 schematically shows one example of the ultraviolet-irradiating device conventionally used (see the patent literature 1).
The ultraviolet-irradiating device 100 has a xenon lamp 101, and light rays L including ultraviolet rays are irradiated from the xenon lamp 101.

The light rays L irradiated from the xenon lamp 101 diffuse in various directions, but a reflecting mirror 103 is generally provided above the xenon lamp 101 in order to effectively irradiate an optical disk 102 with the light rays L.
The light rays L pass through an ultraviolet transmission filter 104 which transmits only useful ultraviolet rays before being irradiated on the optical disk 102.

The ultraviolet transmission filter 104 allows only lights having a wavelength contributing to curing ultraviolet curable resin to be irradiated on the optical disk 102, so that the optical disk 102 can be prevented from being unnecessarily heated by radiation heat.

On the other hand, an air supply line 106 for cooling air is provided on a lamp house 105 covering the xenon lamp 101, air taken in from the air supply line 106 for cooling air is discharged outside from a cooling-air discharge line 107 through the lamp house 105.
Patent literature 1: JP-A-11-254540

### Disclosure of the Invention

### Problem to be solved by the Invention

However, in the conventional ultraviolet-irradiating device 100 of the optical disk 102 described above, a spectral distribution characteristic of lights radiated from the xenon lamp 101 which is a light source shows a wide distribution from an ultraviolet region to an infrared region, so that there is a serious problem that lights in a visible region and the infrared region which do not contribute to curing ultraviolet curable resin are wasted.
In other words, electric power used for emission of the xenon lamp can not be always utilized effectively.

Generally, its own life of a xenon lamp is such relatively short as three to five months, though it depends on a status of use, so that more frequent replacement of xenon lamps is required as compared with the other equipments.
Further, the above-described air-conditioning mechanism is required in order to reduce influence by heat of the xenon lamp on the disk substrate as much as possible.

The present invention has been developed on the basis of the background art, and can overcome each of the problems described above.
That is, an object of the present invention is to provide an ultraviolet-irradiating device of an optical disk which can make effective use of electric power and has a long life, and an ultraviolet-irradiating method of an optical disk. Means for solving the Problem

As a result of an accumulation of intensive studies with respect to such a background of the problem, the present inventor(s) has (have) found that the above-described problem can be solved by using a light source radiating only ultraviolet rays and has (have) completed the present invention on the basis of the finding.

That is, the present invention lies in (1) an ultraviolet-irradiating device of an optical disk for irradiating ultraviolet curable resin applied to disk substrates with ultraviolet rays from an ultraviolet-irradiating unit to cure the ultraviolet curable resin, wherein an ultraviolet light-emitting diode is used as an ultraviolet light source of the ultraviolet-irradiating unit.

The present invention lie in (2) the ultraviolet-irradiating device of an optical disk according to the above (1), wherein a plurality of ultraviolet light-emitting diodes are arranged in the ultraviolet-irradiating unit.

The present invention lies in (3) the ultraviolet-irradiating device of an optical disk according to the above (1), wherein plural kinds of ultraviolet light-emitting diodes are arranged in the ultraviolet-irradiating unit.

The present invention lies in that (4) the ultraviolet-irradiating device of an optical disk according to the above (1), wherein a plurality of ultraviolet light-emitting diodes are arranged at different densities.

The present invention lies in (5) the ultraviolet-irradiating device of an optical disk according to the above (1), wherein a plurality of ultraviolet light-emitting diodes are arranged in a disk shape in the whole ultraviolet-irradiating unit.

The present invention lies in (6) the ultraviolet-irradiating device of an optical disk according to the above (1), wherein a plurality of ultraviolet light-emitting diodes are arranged in a rectangular shape in the whole ultraviolet-irradiating unit.

The present invention lies in (7) the ultraviolet-irradiating device of an optical disk according to the above (1), wherein the ultraviolet-irradiating unit can be selectively located at an irradiation position and a retreated position with respect to the disk substrates.

The present invention lies in (8) the ultraviolet-irradiating device of an optical disk according to the above (1), wherein the ultraviolet-irradiating unit can freely approach to the disk substrates.

The present invention lies in (9) the ultraviolet-irradiating device of an optical disk according to the above (1), wherein a light diffusing member is provided between the ultraviolet light-emitting diodes and the disk substrates in order to equalize the ultraviolet intensities of the ultraviolet light-emitting diodes.

The present invention lies in (10) the ultraviolet-irradiating device of an optical disk according to the above (1), wherein a whole surface irradiance-measuring unit for measuring irradiances of all the ultraviolet light-emitting diodes is provided.

The present invention lies in (11) the ultraviolet-irradiating device of an optical disk according to the above (1), wherein a partial irradiance-measuring unit for measuring irradiances of individual ultraviolet light-emitting diodes.

The present invention lies in (12) an ultraviolet-irradiating method to an optical disk for joining disk substrates with each other by irradiating ultraviolet curable resin applied to the disk substrates with ultraviolet rays, wherein an ultraviolet-irradiating unit where a plurality of ultraviolet light-emitting diodes are arranged is arranged above the disk substrates to irradiate the whole surfaces of the disk substrates with ultraviolet rays.

The present invention lies in (13) the ultraviolet-irradiating method to an optical disk according to the above (12), wherein the disk substrates are rotated.

The present invention lies in (14) the ultraviolet-irradiating method to an optical disk for joining disk substrates with each other by irradiating ultraviolet curable resin applied to between the disk substrates with ultraviolet rays, wherein a rod-like ultraviolet-irradiating unit where a plurality of ultraviolet light-emitting diodes are arranged is arranged above the disk substrates in a diameter direction thereof so that the whole surfaces of the disk substrates is irradiated with ultraviolet rays according to rotation of the disk substrates.

The present invention lies in (15) the ultraviolet-irradiating method to an optical disk according to one of the above (12) or (14), wherein the ultraviolet light-emitting diode emits light intermittently according to application of pulsing voltage to the ultraviolet light-emitting diode.

A configuration where some of the above (1) to (15) are combined properly can be employed as long as it attains the object of the present invention.

### Effect of the Invention

According to the present invention, since the ultraviolet light-emitting diode is used as an ultraviolet light source, lights in a visible region and an infrared region are not emitted like a conventional xenon lamp, that is, only ultraviolet rays required for curing the ultraviolet curable resin can be irradiated, so that power consumption required for light emission of the light source can be reduced.
Further, since the life of the ultraviolet light-emitting diode is long, the number of replacement times is reduced, which improves utilization rate.
Since heat generation is relatively reduced unlike the conventional light source, the optical disk is not adversely influenced.
If a plurality of ultraviolet light-emitting diodes having different wavelengths are arranged, the present invention can be applied to ultraviolet curable resin having a different curing wavelength, which results in that the present invention can address a wide range of kinds of ultraviolet curable resin to obtain versatility.

### Best mode for carrying out the Invention

Best mode for carrying out the present invention will be explained below with reference to drawings.
First, in order to position an ultraviolet-irradiating device of the present invention, one example of a manufacturing line for optical disks provided with the ultraviolet-irradiating device will be explained schematically.

### (First embodiment)

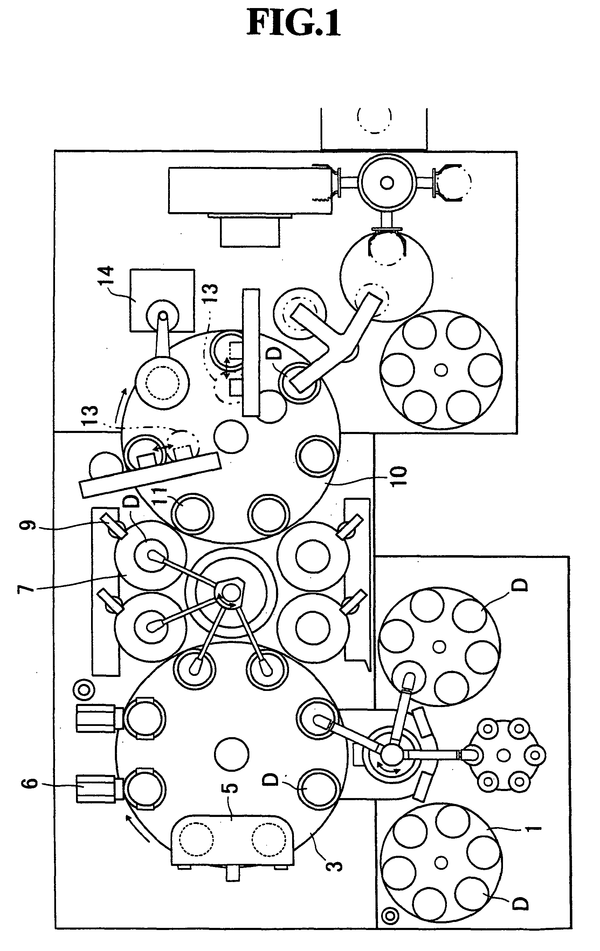

Fig. 1 is a diagram showing a manufacturing line for optical disks including an ultraviolet-irradiating device of an optical disk according to a first embodiment of the present invention.

### Disk substrate supplying step

Here, disk substrates D are first placed on a turntable 3 from a stocking unit 1 where disk substrates D are stocked.

Dust, static electricity, or the like is removed from the respective placed disk substrates D by a cleaner 5 or the like.
Only an upper disk substrate D is reversed by a reverser 6, and a bonding face thereof with a lower disk substrate D is reversed so as to face downward.

### Adhesive agent spreading step

Here, the disk substrate D is conveyed to be placed on a rotating table 7 from the turntable 3 in the disk substrate supplying step which is the previous step.
Adhesive agent is applied on the disk substrate D by a resin dispenser 9.

Next, another disk substrate D is placed on the disk substrate D applied with adhesive agent, and adhesive agent between both disk substrates is spread by high-speed rotation of the rotating stand 7.

### Adhesive agent curing step

The two disk substrates D which has finished the spreading step is placed on a stand (an ultraviolet transmitting stand 11) of the turntable 10 from the rotating stand 7.

After the disk substrates D are placed on a receiving stand, the turntable 10 rotates by a fixed angle for indexing, and a center weight (not shown) is placed on the disk substrates D of the ultraviolet transmitting stand 11 (that is, it is placed on a clamping area of a disk inner periphery).

By placing, for example, a transparent center weight on the disk substrates D, the disk substrates D get into a stable state where recurvature does not occur due to the weight of this plate.

### Ultraviolet-irradiating step

Next, the turntable 10 rotates by a fixed angle for indexing and comes to an ultraviolet-irradiating position.
At this position, the disk substrates D are irradiated with ultraviolet rays by an ultraviolet-irradiating device 14 from above and below the disk substrates D.
In this case, since the disk substrates D are held between an ultraviolet transmitting plate 13 and the ultraviolet transmitting stand 11 which can transmit ultraviolet rays, ultraviolet rays can be irradiated from both upper and lower sides of the disk substrates without any problem.

Ultraviolet irradiation is performed, for example, for two to three seconds, so that adhesive agent (ultraviolet curable resin) mediating in between the two disk substrates D is rapidly cured.

### Disk substrate transferring step [Inspection step]

Both the disk substrates D integrated are taken out from the turntable 10, and inspection items (for example, degree of tilt and the like) are checked to make determination about acceptance/rejection at another position.
An optical disk is completed in this manner.

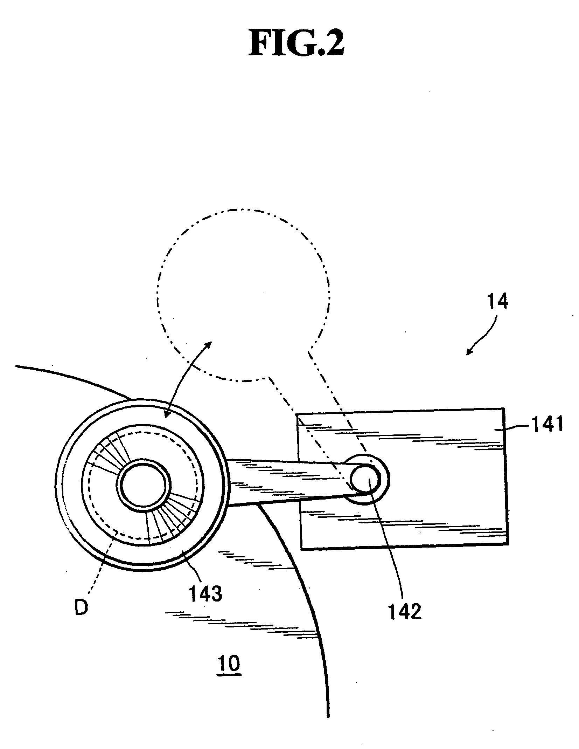

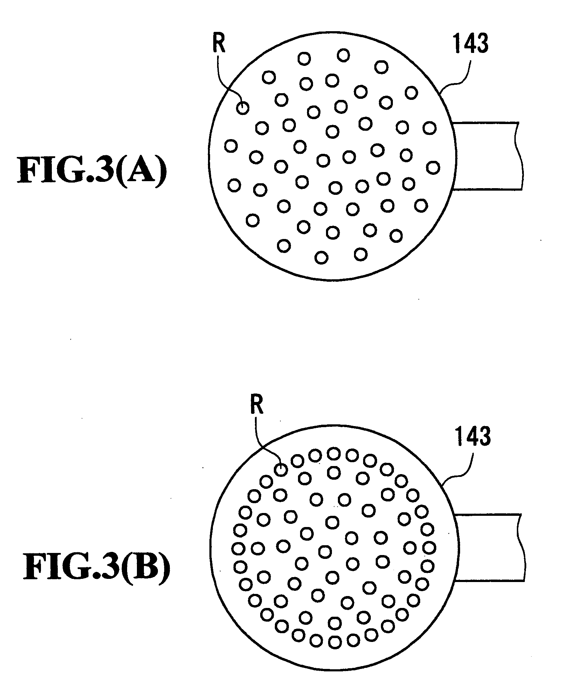

Here, the ultraviolet-irradiating device 14 in the ultraviolet-irradiating step will be explained in further detail with reference to schematic explanatory views shown in Fig. 2 and Figs. 3.
In the ultraviolet-irradiating device 14, an ultraviolet-irradiating unit 143 is pivotally provided via a pivoting shaft 142 on a base portion (control unit) 141.
When ultraviolet rays are irradiated on disk substrates D, the ultraviolet-irradiating unit 143 is positioned on the turntable 10 to perform irradiation.
When irradiation is not performed, the ultraviolet-irradiating unit 143 is moved from the turntable 10 to a retreated position (shown with an alternate long and two short dashes line).

The ultraviolet-irradiating unit 143 is arranged with a plurality of ultraviolet light-emitting diodes R on its face opposite to the disk substrates D.
The size of the ultraviolet-irradiating unit 143 is a size which can sufficiently cover the disk substrates D to be irradiated (object to be irradiated).
Since the pivoting shaft 142 can move vertically, degree of approach to the disk substrates D to be irradiated can be adjusted properly.

Figs. 3 are schematic explanatory views showing arrangement states of the ultraviolet light-emitting diodes R in the ultraviolet-irradiating unit 143.
The ultraviolet light-emitting diodes R are arranged in a disk shape over the whole ultraviolet-irradiating unit 143.

When the ultraviolet light-emitting diodes R are arranged, it is preferable that the diodes are arranged regularly at a constant density so as to make intensity of light irradiated on the disk substrate face even (see Fig. 3(A)).
However, in order to ensure curing adhesive agent near outer peripheral ends of the disk substrates, it is also possible to arrange the ultraviolet light-emitting diodes R at different densities.
For example, by arranging the ultraviolet light-emitting diodes R at the outer periphery of the ultraviolet-irradiating unit 143 so as to increase density, sufficient curing can be achieved in a region of the end portions of the disk substrates D where it is difficult to cure the ultraviolet curable resin (see Fig. 3(B)).
That is, partially strong and weak of ultraviolet irradiation can be given to the disk substrates D according to an arrangement state of the ultraviolet-irradiating unit 143.

As the ultraviolet curable resin, for example, a material obtained by adding optical curing initiator to (meta)acrylates, a material obtained by adding optical curing initiator to epoxy compound, a material obtained by adding optical curing initiator to acrylic compound, a material obtained by adding optical curing initiator to a material containing polyene and polythiol as main components, a material obtained by mixing the above materials, or the like is employed.

By the way, since there is a case that wavelength or intensity of ultraviolet rays required for curing an ultraviolet curable resin is slightly different according to the ultraviolet curable resin, the ultraviolet-irradiating unit 143 is designed to correspond to the ultraviolet curable resin.

Generally, most of ultraviolet curable resins have their peak of photosensitivity to light having a wavelength of 365nm or light having a wavelength of 400nm, for example, so that light rays having a wavelength region of 300nm to 430nm can be enough to cure the ultraviolet curable resins sufficiently.

Therefore, as an ultraviolet light-emitting diode R, for example, an ultraviolet light-emitting diode having its peak of 395nm to 420 nm is used (for example, see US2002/0074559A1).
For example, specifically, an ultraviolet light-emitting diode manufactured by NITRIDE SEMICONDUCTORS. CO., LTD. (Model: NS365C, NS370C, or NS375C) can be used.

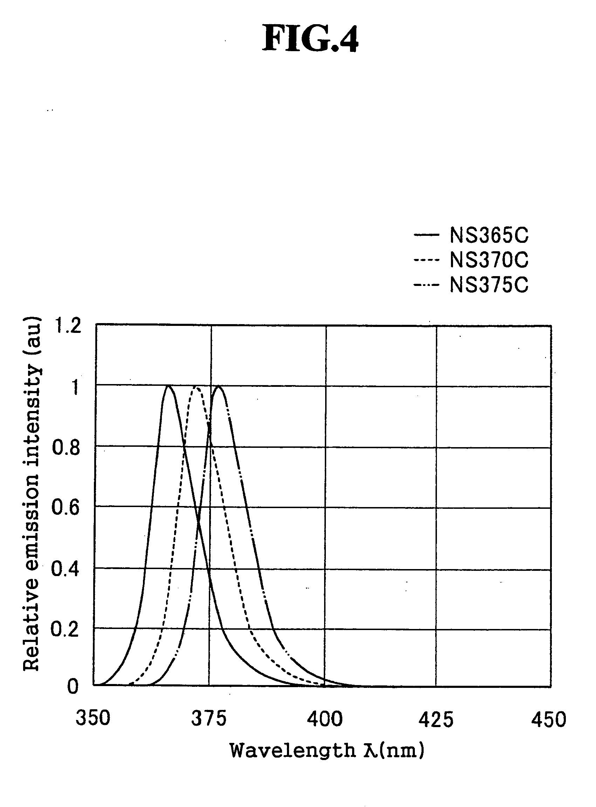

A relationship between emission wavelength and relative emission intensity of these products is shown in Fig. 4 (the relative emission intensity of y axis is defined by setting light intensity of peak wavelength to 1).
In Fig. 4, a solid line shows wavelength distribution of the ultraviolet light-emitting diode of Model NS365C, and a peak wavelength of the diode is near 365 nm.
It is understood from Fig. 4 that the ultraviolet light-emitting diode of Model NS365C radiates lights having wavelengths of about 350nm to 400nm.

Similarly, in Fig. 4, a dashed line shows the ultraviolet light-emitting diode of Model NS370C, it is understood that a peak wavelength of the diode is near 370nm and wavelengths of lights radiated are about 355nm to 405nm.
In addition, similarly, in Fig. 4, an alternate long and two short dashes line shows the ultraviolet light-emitting diode of Model NS375C, it is understood that a peak wavelength of the diode is near 380nm, and wavelengths of lights radiated are about 360nm to 410nm.

In this manner, since lights radiated from the ultraviolet light-emitting diode R are effectively used to cure ultraviolet curable resin, power consumption required for light emission of a light source can be reduced as compared with a xenon lamp or the like, which is efficient, so that energy saving can be achieved.
The ultraviolet light-emitting diode R may emit lights intermittently by applying pulsing voltage to the ultraviolet light-emitting diode.

In such an ultraviolet-irradiating device 14 as described above, a device having a complicated mechanism such as a conventional device using a xenon lamp or the like is not required to be used, which largely contributes to space-saving or cost reduction.
Since the life of the ultraviolet light-emitting diode R is about several years which is much longer than several months of a xenon lamp, the number of replacement times is reduced, which is a great merit.
A heating value of the ultraviolet light-emitting diode R is smaller than that of a so-called xenon lamp, but, it is preferable that a cooling mechanism (not shown) is provided on an arrangement face of the ultraviolet light-emitting diode R (namely, a foundation portion) such that the disk substrates D is not influenced by heat as much as possible.
The same is true in each embodiment described below.

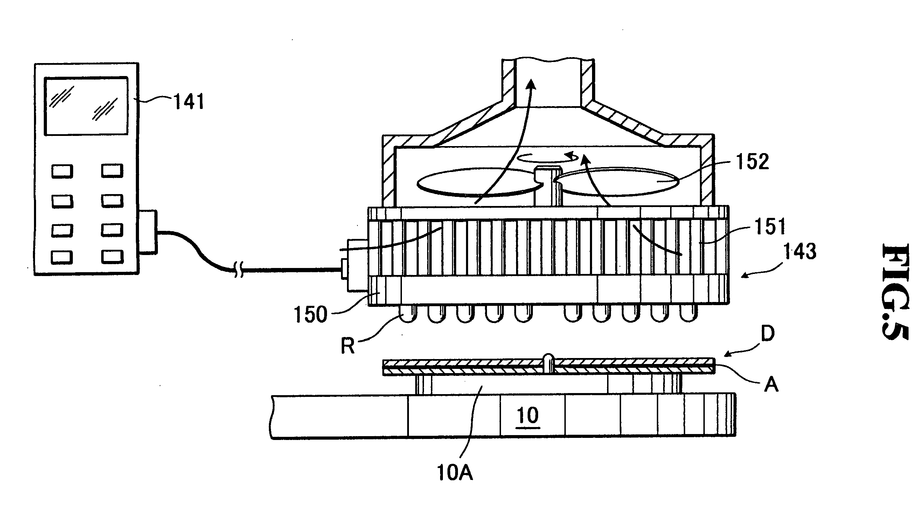

Fig. 5 is a schematic view showing an ultraviolet-irradiating device provided with a cooling mechanism more specifically.
The disk substrates D placed on a rotating stand 10A on the turntable 10 is opposite to the ultraviolet-irradiating unit 143 of the ultraviolet-irradiating device.
An air cooling unit 151 for increasing a contact area is formed on a back side (an upper side in Fig. 5) of the foundation portion 150 attached with the ultraviolet light-emitting diodes R, and it can diffuse heat.

A rotating fan 152 is attached above the air cooling unit 151, circumambient air flows to pass through the air cooling unit 151 according to rotation of the rotating fan 152 like arrows to be discharged from the above.
A temperature detector is provided at a proper position of the foundation portion 150, so that warning is issued by a control unit 141 when a temperature abnormally rises from any cause.

### Second embodiment

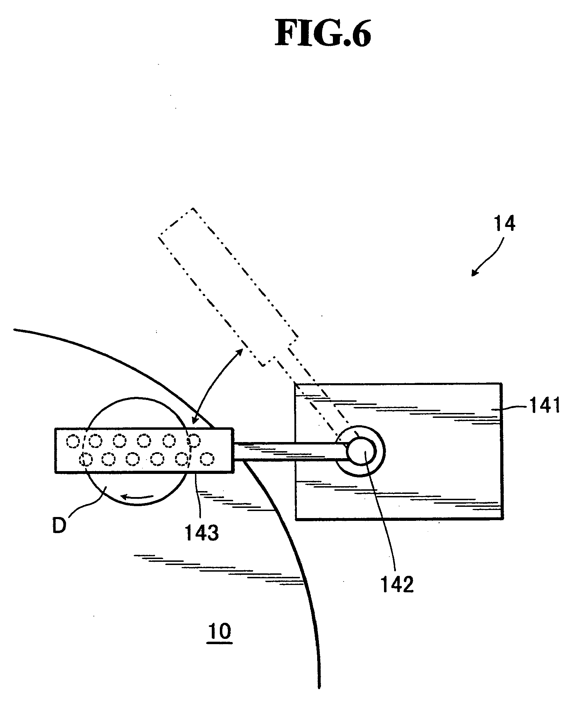

Fig. 6 shows ultraviolet-irradiating device of an optical disk according to a second embodiment of the present invention.
In this embodiment, similarly, the ultraviolet-irradiating device 14 is pivotally attached with the ultraviolet-irradiating unit 143 via the pivoting shaft 142 provided on the control unit 141.
Of course, degree of approach of the ultraviolet-irradiating unit 143 to the disk substrates D can be adjusted according to vertical movement of the pivoting shaft 142.
A plurality of the ultraviolet light-emitting diodes R are arranged regularly on the ultraviolet-irradiating unit 143 at a constant density.

The ultraviolet light-emitting diodes R are arranged in plural rows (here, two rows) in a rectangular shape on the ultraviolet-irradiating unit 143.
Each diode of the ultraviolet light-emitting diodes R aligned in one row is arranged so as to be positioned between adjacent ones of the ultraviolet light-emitting diodes R aligned in the other row in a staggered manner.
Thereby, there is an advantage of making ultraviolet rays even entirely, which is effective especially when ultraviolet rays are irradiated on the whole face of the disk substrates in a state that the disk substrates D are rotated.
When ultraviolet irradiation is performed, this rod-like ultraviolet-irradiating unit 143 is pivoted to be moved from the retreated position (an alternate long and two short dashes line) to the irradiation position.
That is, the ultraviolet-irradiating unit 143 is arranged above the disk substrates D in a diameter direction of the disk substrates so as to cross the center of the disk substrates D to irradiate ultraviolet rays.

### Third embodiment

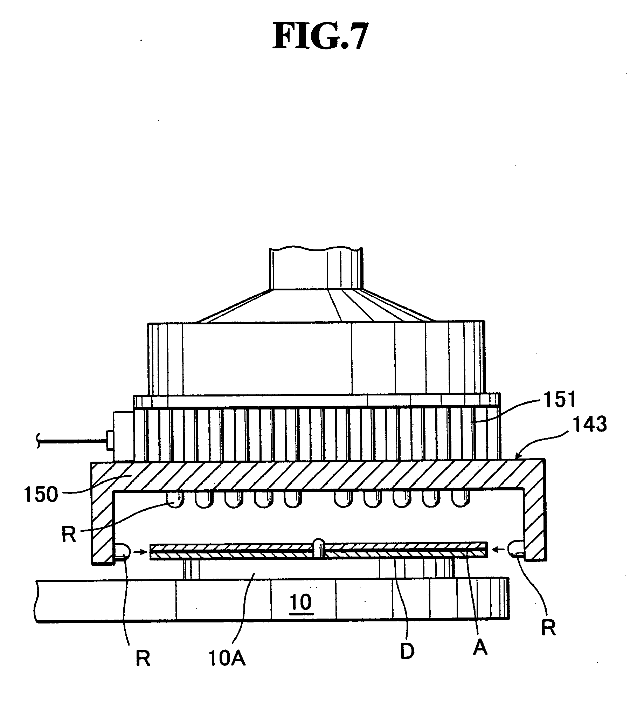

Fig. 7 is a schematic explanatory view showing an ultraviolet-irradiating device of an optical disk according to a third embodiment of the present invention.
In this embodiment, the ultraviolet-irradiating unit 143 of the ultraviolet-irradiating device is not only provided with the ultraviolet light-emitting diodes R which irradiate ultraviolet rays from above the disk substrates D but also provided with the ultraviolet light-emitting diodes R which irradiate ultraviolet rays to the end sides of the disk substrates D.
Therefore, it is possible to efficiently cure ultraviolet curable resin (namely, adhesive agent) A on the peripheral edge portion of the disk substrates D.
The ultraviolet light-emitting diodes R which irradiate ultraviolet rays to the end side of the disk substrates D can be applied to the ultraviolet-irradiating unit 143 where the ultraviolet light-emitting diodes R are arranged in a disk shape in the first embodiment described above or the ultraviolet-irradiating unit 143 where the ultraviolet light-emitting diodes R are arranged in a rectangular shape shown in the second embodiment, of course.

### Fourth embodiment

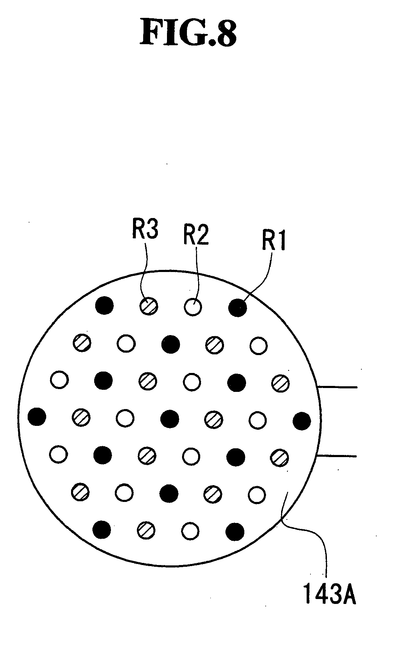

Fig. 8 is a schematic explanatory view showing an arrangement of the ultraviolet light-emitting diodes of an ultraviolet-irradiating device of an optical disk according to a fourth embodiment of the present invention.
The fourth embodiment is an ultraviolet-irradiating device where a plurality of ultraviolet light-emitting diodes which are different in wavelength distribution are used.
Three kinds of ultraviolet light-emitting diodes R1, R2, and R3 which are different in wavelength distribution are arranged on the ultraviolet-irradiating unit 143 of the fourth embodiment.
For example, peaks of wavelengths of lights radiated from the ultraviolet light-emitting diodes R1, R2, and R3 are 340nm, 365nm, and 390 nm, respectively.

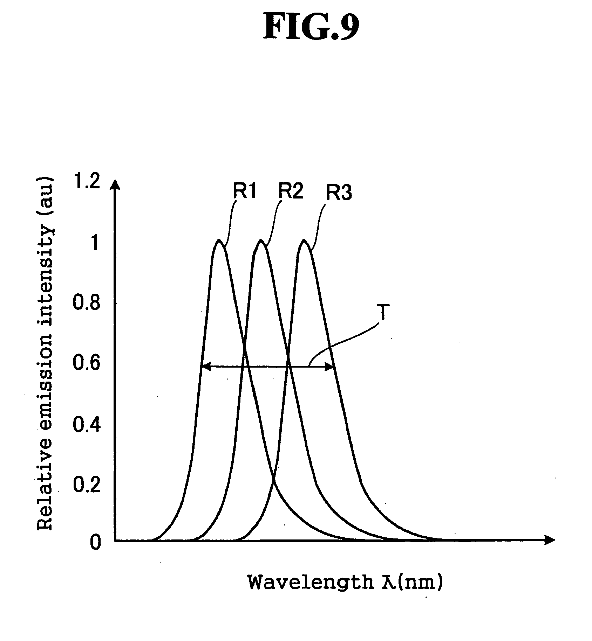

When plural kinds of the ultraviolet light-emitting diodes R1, R2, and R3 which are different in wavelength distribution are used in this manner, a range of wavelength distribution becomes wide, as can be understood from an illustrated diagram in Fig. 9.
Specifically, a width T of a spectral distribution of ultraviolet rays at a relatively high part (for example, 0.7 or more) of relative emission intensity becomes much wider as compared with a case of one kind.
Therefore, it is possible to cure ultraviolet curable resins versatilely even if the kind of the ultraviolet curable resin is different.

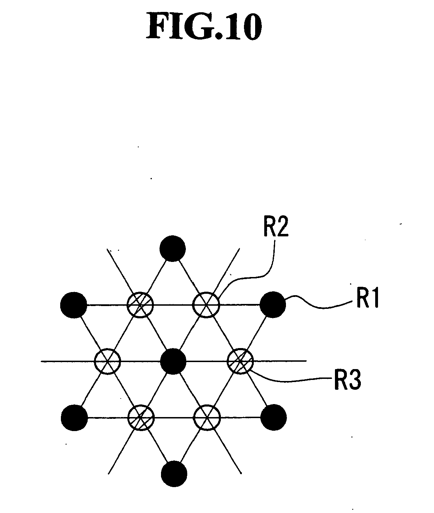

Fig. 10 is a diagram showing a part of the ultraviolet-irradiating unit 143 in an enlarged manner and explaining an arrangement state of the ultraviolet light-emitting diodes.
As shown in Fig. 10, three kinds of the adjacent ultraviolet light-emitting diodes R1, R2, and R3 which are different in wavelength distribution are arranged so as to be positioned at apexes of a triangle, respectively.
When such an arrangement is employed, the three kinds of the ultraviolet light-emitting diodes R1, R2, and R3 are arranged with equal spacing, so that intensity of ultraviolet rays irradiated on the disk substrates D of each kind can be made even.

### Fifth embodiment

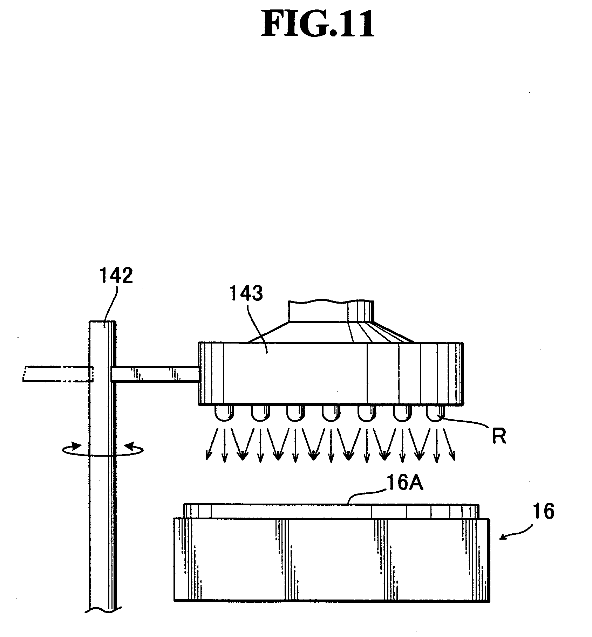

Fig. 11 is a schematic explanatory view of an ultraviolet-irradiating device of an optical disk according to a fifth embodiment of the present invention.
This is an ultraviolet-irradiating device of an optical disk provided with a device that measures irradiance of ultraviolet light-emitting diodes.

In the retreated position of the ultraviolet-irradiating unit 143 shown with alternate long and two short dashes line in Fig. 2 described above, irradiance of light irradiated from the ultraviolet light-emitting diodes R of the ultraviolet-irradiating unit 143 is measured by an irradiance meter 16 having a whole surface irradiance-measuring unit 16A (provided with many light receiving elements CCD).
In case that, irradiance is lowered by periodically measuring irradiance of light emitted from the ultraviolet-irradiating unit 143 after the ultraviolet-irradiating device is used for a constant time period, correction for raising irradiance is performed by increasing current flowed in the ultraviolet light-emitting diodes to a certain value.
In case that irradiance does not rise to a certain reference according to increase of current, the ultraviolet light-emitting diodes are regarded as being deteriorated, and all the ultraviolet light-emitting diodes are replaced with new ones.
In this case, it is possible to measure irradiance at a using position of the ultraviolet-irradiating unit 143 by making the irradiance meter 16 movable, of course.

### Sixth embodiment

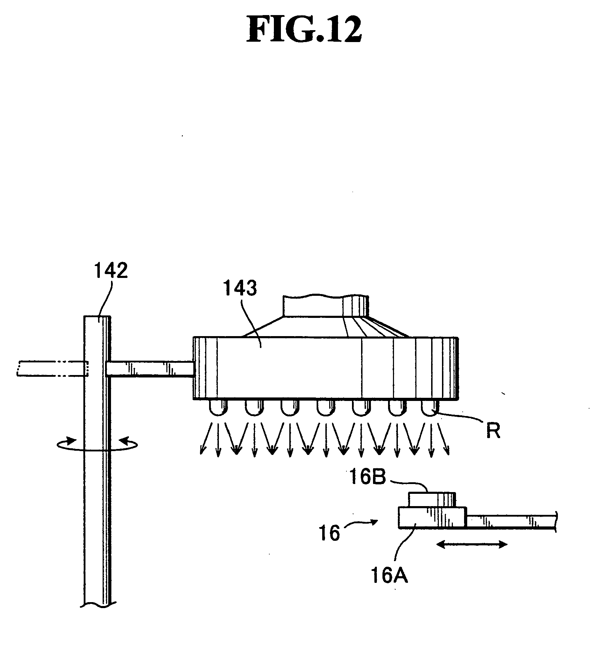

Fig. 12 is a schematic explanatory view of an ultraviolet-irradiating device of an optical disk according to a sixth embodiment of the present invention.
This is an ultraviolet-irradiating device of an optical disk provided with a device that measures irradiances of the individual ultraviolet light-emitting diodes.
In this case, an irradiance meter 16 having a small-sized partial irradiance-measuring unit 16B that measures irradiance of one ultraviolet light-emitting diode in the ultraviolet-irradiating unit 143 is used.
After the ultraviolet-irradiating device is used for a constant time period, the irradiances of lights emitted from the individual ultraviolet-irradiating unit 143 are measured.
A measuring position is sequentially shifted at certain time intervals to measure irradiances of the individual ultraviolet light-emitting diodes R of the ultraviolet-irradiating unit 143.
Since irradiances of the individual ultraviolet light-emitting diodes R can be measured, failure of one ultraviolet light-emitting diode can be detected.
Because of the small-sized partial irradiance-measuring unit 16B, movement thereof is made easy, and measurement is performed easily at a using position of the ultraviolet-irradiating unit 143.

### Seventh embodiment

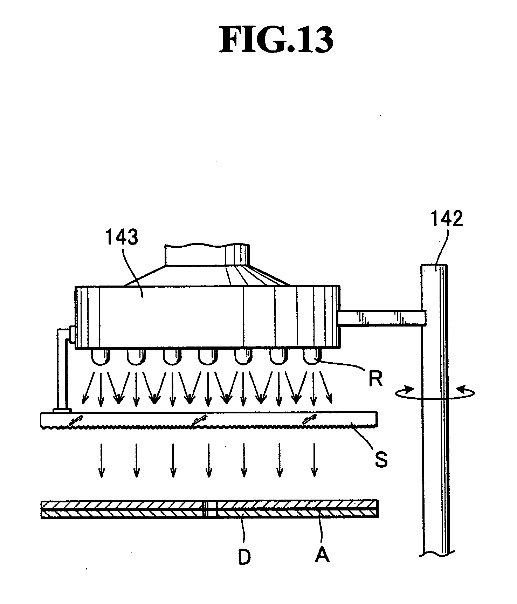

Fig. 13 is a schematic explanatory view of an ultraviolet-irradiating device of an optical disk according to a seventh embodiment of the present invention.
This device is characterized by including a light diffusing member S between the ultraviolet light-emitting diodes R and the disk substrates D to be irradiated.
In the present invention, since the ultraviolet light-emitting diodes R are independent individually, they are arranged at certain intervals, so that intensity of ultraviolet rays in a region between the diodes becomes weak inevitably.
Therefore, intensity of ultraviolet rays becomes uneven in the ultraviolet-irradiating unit as a whole, which results in that irradiance received by the disk substrates D becomes uneven, of course.
By using the light diffusing member S in order to prevent such a phenomenon, intensities of ultraviolet rays emitted by the individual ultraviolet light-emitting diodes R are made even.
As a light diffusing member S, for example, a glass plate whose lower face is a rough face or a transmissive plastic sheet can be used.

Although the present invention has been explained above, it is not limited to the above-described embodiments and it is obvious that another various changes can be made without departing from the nature thereof.

For example, only the case that disk substrates are bonded to each other has been described, but the present invention can be also applied to a case where a disk substrate D is subjected to overcoating process, of course.
The case that ultraviolet rays are irradiated in a state that disc substrates D are placed on the turntable 10 has been shown, but it is also possible to irradiate ultraviolet rays on the disk substrates D placed on a holding stand other than the turntable 10, of course.

In addition, the ultraviolet-irradiating device 14 of the present invention has a configuration that its time, voltage, current, and the like are controlled by a controller unit.
Further, the foundation portion 150 of the ultraviolet-irradiating unit 143 can take various shapes, and ultraviolet light-emitting diodes can also take various arrangements.

### Industrial applicability

Although the present invention relates to a device and a method used in case of curing adhesive agent (including overcoating agent) applied to a disk substrate(s) according to ultraviolet irradiation, it can be applied to another field, for example, parts fixation field or the like as long as adhesive agent or the like is cured by ultraviolet irradiation, and its application field is thus wide.

### Brief description of drawings

Fig. 1 is an explanatory view showing a manufacturing line for optical disks including an ultraviolet-irradiating device of an optical disk according to a first embodiment of the present invention.
Fig. 2 is a schematic explanatory view of the ultraviolet-irradiating device in Fig. 1.
Figs. 3 are schematic explanatory views showing an arrangement of ultraviolet light-emitting diodes in the ultraviolet-irradiating device in Fig. 2. Fig. 3(A) shows a state that the ultraviolet light-emitting diodes are arranged regularly at a constant density so that intensity of light irradiated on the disk substrate face becomes even. Fig. 3 (B) shows a state that the ultraviolet light-emitting diodes are arranged at an outer peripheral side of the ultraviolet-irradiating unit so as to increase density.
Fig. 4 is an explanatory view showing a relationship between wavelength and relative emission intensity of an ultraviolet light-emitting diode.
Fig. 5 is a schematic view showing an ultraviolet-irradiating device provided with a cooling mechanism more specifically.
Fig. 6 shows an ultraviolet-irradiating device an optical disk according to a second embodiment of the present invention.
Fig. 7 is a schematic explanatory view showing an ultraviolet-irradiating device of an optical disk according to a third embodiment of the present invention.
Fig. 8 is a schematic explanatory view showing an arrangement of ultraviolet light-emitting diodes of an ultraviolet-irradiating device an optical disk according to a fourth embodiment of the present invention.
Fig. 9 is an explanatory view illustratively showing a relationship between wavelength and relative emission intensity of an ultraviolet light-emitting diode.
Fig. 10 is a diagram showing a part of the ultraviolet-irradiating unit 143 in Fig. 8 in an enlarged manner and explaining an arrangement state of ultraviolet light-emitting diodes.
Fig. 11 is a schematic explanatory view of an ultraviolet-irradiating device of an optical disk according to a fifth embodiment of the present invention.
Fig. 12 is a schematic explanatory view of an ultraviolet-irradiating device of an optical disk according to a sixth embodiment of the present invention.
Fig. 13 is a schematic explanatory view of an ultraviolet-irradiating device of an optical disk according to a seventh embodiment of the present invention.
Fig. 14 is an explanatory view showing an example of a conventional ultraviolet-irradiating device.

### Explanation of reference numerals

- 1: stocking unit
- 3: turntable
- 5: cleaner
- 6: reverser
- 7: rotating stand
- 9: resin dispenser
- 10: turntable
- 10A: rotating stand
- 11: ultraviolet transmitting stand
- 13: ultraviolet transmitting plate
- 14: ultraviolet-irradiating device
- 141: controller unit
- 142: pivoting shaft
- 143: ultraviolet-irradiating unit
- 150: foundation portion
- 151: air cooling unit
- 152: rotating fan
- 16: irradiance meter
- 16A: whole surface irradiance-measuring unit
- 16B: partial irradiance-measuring unit
- 100: ultraviolet-irradiating device
- 101: xenon lamp
- 102: optical disk
- 103: reflecting mirror
- 104: ultraviolet transmission filter
- 105: lamp house
- 106: air supply line
- 107: cooling-air discharge line

- A: ultraviolet curable resin (adhesive agent)
- D: disk substrate
- L: light ray
- R: ultraviolet light-emitting diode
- S: light diffusing member
- T: width

## Claims

1. An ultraviolet-irradiating device of an optical disk for irradiating ultraviolet curable resin applied to disk substrates with ultraviolet rays from an ultraviolet-irradiating unit to cure ultraviolet curable resin, wherein
an ultraviolet light-emitting diode is used as an ultraviolet light source of a ultraviolet-irradiating unit.

2. The ultraviolet-irradiating device of an optical disk according to claim 1, wherein a plurality of ultraviolet light-emitting diodes are arranged in the ultraviolet-irradiating unit.

3. The ultraviolet-irradiating device of an optical disk according to claim 1, wherein plural kinds of ultraviolet light-emitting diodes are arranged in the ultraviolet-irradiating unit.

4. The ultraviolet-irradiating device of an optical disk according to claim 1, wherein a plurality of ultraviolet light-emitting diodes are arranged at different densities.

5. The ultraviolet-irradiating device of an optical disk according to claim 1, wherein a plurality of ultraviolet light-emitting diodes are arranged in a disk shape in the whole ultraviolet-irradiating unit.

6. The ultraviolet-irradiating device of an optical disk according to claim 1, wherein a plurality of ultraviolet light-emitting diodes are arranged in a rectangular shape in the whole ultraviolet-irradiating unit.

7. The ultraviolet-irradiating device of an optical disk according to claim 1, wherein the ultraviolet-irradiating unit can be selectively located at an irradiation position or a retreated position with respect to the disk substrates.

8. The ultraviolet-irradiating device of an optical disk according to claim 1, wherein the ultraviolet-irradiating unit can freely approach to the disk substrates.

9. The ultraviolet-irradiating device of an optical disk according to claim 1, wherein a light diffusing member is provided between the ultraviolet light-emitting diodes and the disk substrates in order to make ultraviolet intensities of the ultraviolet light-emitting diodes even.

10. The ultraviolet-irradiating device of an optical disk according to claim 1, wherein a whole surface irradiance-measuring unit for measuring irradiances of all the ultraviolet light-emitting diodes is provided.

11. The ultraviolet-irradiating device of an optical disk according to claim 1, wherein a partial irradiance-measuring unit for measuring irradiances of individual ultraviolet light-emitting diodes.

12. An ultraviolet-irradiating method to an optical disk for bonding disk substrates with each other by irradiating ultraviolet curable resin applied to the disk substrates with ultraviolet rays, wherein
an ultraviolet-irradiating unit where a plurality of ultraviolet light-emitting diodes are arranged is arranged above the disk substrates to irradiate a whole surface of the disk substrates with ultraviolet rays.

13. The ultraviolet-irradiating method to an optical disk according to claim 12, wherein the disk substrates are rotated.

14. An ultraviolet-irradiating method to an optical disk for bonding disk substrates with each other by irradiating ultraviolet curable resin applied to the disk substrates with ultraviolet rays, wherein
a rod-like ultraviolet-irradiating unit where a plurality of ultraviolet light-emitting diodes are arranged is arranged above the disk substrates in a diameter direction thereof so that a whole surface of the disk substrates is irradiated with ultraviolet rays according to rotation of the disk substrates.

15. The ultraviolet-irradiating method to an optical disk according to claim 12 or 14, wherein the ultraviolet light-emitting diode emits light intermittently according to application of pulsing voltage to the ultraviolet light-emitting diode.
